Europäisches Patentamt

European Patent Office

Office européen des brevets

(11) Publication number: **0 124 294**
**B1**

## EUROPEAN PATENT SPECIFICATION

(45) Date of publication of patent specification: **31.08.88**

(21) Application number: **84302235.1**

(22) Date of filing: **02.04.84**

(51) Int. Cl.⁴: **F 26 B 17/12,** F 26 B 3/06,
F 26 B 3/14

(54) Apparatus for conditioning hygroscopie plastic material.

(30) Priority: **05.04.83 CA 425183**

(43) Date of publication of application:
**07.11.84 Bulletin 84/45**

(45) Publication of the grant of the patent:
**31.08.88 Bulletin 88/35**

(84) Designated Contracting States:
**AT BE CH DE FR GB IT LI NL SE**

(56) References cited:
**GB-A-1 200 731**
**US-A-3 837 092**
**US-A-3 875 683**

(73) Proprietor: **CACTUS MACHINERY INC.**
**951 Denison Street**
**Markham Ontario L3R 3W4 (CA)**

(72) Inventor: **Neilson, James R.**
**158 B Victor Avenue**
**Toronto Ontario M4K 1B1 (CA)**
Inventor: **Bishop, Robert Rex**
**93 Palmdale Drive**
**Agincourt Ontario M1T 1P2 (CA)**

(74) Representative: **Fisher, Bernard et al**
**Raworth, Moss & Cook 36 Sydenham Road**
**Croydon Surrey CR0 2EF (GB)**

Courier Press, Leamington Spa, England.

## Description

This invention relates to apparatus for conditioning granular resins for use in plastics molding or extrusion machines.

In the art of injection molding and extruding plastics, it is often necessary to remove moisture from the plastic resins prior to use in a plastics forming machine. This is particularly important in situations where any moisture present in the resin can result in flaws in the formed product. Many resins used in plastic forming techniques are hygroscopic which can require many hours of drying time before use. Examples of such hygroscopic resins are nylon, acrylics, ABS (acrylonitrile-butidiene-styrene), polycarbonates and thermoplastic polyesters. An example of a device which has been developed to reduce the moisture content of such granular resins is disclosed in United States patent 3,875,683. The granular resin passes downwardly through the bin and dry conditioning air is forced upwardly through the resin by way of plenums located at the base and/or centrally of the bin. By forcing the dry air into the resin from the central region of the bin, a complex arrangement of plenums, collecting channels and desiccant beds for the moisture laden gases is required thereby adding to the size of the unit and complexity in structure.

According to the invention there is provided apparatus for removing moisture from granules of plastic resin comprising a barrel with a peripheral wall which is vertically oriented in use and having means for receiving granular resin into the upper region thereof whereby such granular resin moves downwardly of said barrel under the influence of gravity, means for discharging granular resin from the lower region of said barrel, characterised in that a plurality of longitudinally extending spaced-apart means provide fin-like projections internally of and integrally with said barrel wall, a plurality of spaced-apart apertures in the barrel wall, means extending lengthwise of said barrel to define a channel for permitting a flow of gases thereinto and therealong, said fin-like projections being spaced from said channel means with said channel means located centrally of said barrel, means for effecting a flow of gases for drying granular resin through the apertures in said barrel wall, over granules of resin in said barrel and into and along said channel means, said channel means being adapted to exhaust such gases away from such granular resin and outwardly of said barrel.

According to a preferred aspect of the invention, the gases which flow over the resin are preheated by way of a helical heating coil which surrounds and is spaced-apart from the barrel periphery. A temperature controller may be used to determine the temperature of the granular resin and control the temperature of the heater coil so as to heat the granular resin by the heated gases to within a desired temperature range.

Preferred embodiments of the invention are shown in the drawings wherein:

Figure 1 is a section through the apparatus for removing moisture from and preconditioning granular plastic resin charged into the plasticisation screw area of a plastics forming machine;

Figure 2 is a perspective view of the apparatus of Figure 1 with a portion removed to show details thereof;

Figure 3 is a perspective view of the resin receiving bin with a section removed;

Figure 4 is a section through the upper portion of the apparatus of Figure 1;

Figure 5 is a section along lines 5—5 of Figure 1, and;

Figure 6 is an enlarged section of the resin receiving area for the plasticisation screw of Figure 1.

The apparatus, according to this invention, may be used in various situations for removing moisture from granular plastic resin, particularly, hygroscopic types of resins. Such apparatus is applicable for use on plastic injection molding machines and plastic extrusion machines which commonly have a standard plasticization screw feed with a heated barrel. With hygroscopic resins, moisture may be held within the granules and cannot be readily removed by surface air passing over them. According to this invention, the water vapour released by heating moisture within the resin during plasticization of the plastic is removed from the screw area.

An apparatus in which the invention is embodied demonstrates its use with the plasticization screw of a plastics forming device such as an injection molding or extrusion machine. The screw device 10 of the plastics forming machine comprises a tube 12 which may be heated by cartridge heaters or the like (not shown) in which an auger or screw 14 is provided. The screw has a tapered core 16 with a helical screw ridge 18. The conditioned granular resin 20 travels down the receiving inlet 22 into the screw region 24. Area 24 is heated to a temperature such that the warmed resin 20, upon entering the region 24, becomes plasticized as it moves along the tube 12 so as to become softened for extrusion or injection molding purposes.

The apparatus 26 for conditioning the resin comprises a barrel or bin 28 having a hopper feed 30 at its upper portion 32. At the lower portion 34 is the discharge port or opening 36. The resin is placed in the hopper feed 30 and by gravitational flow the resin flows downwardly through the barrel 28, through the discharge port 36 and into the inlet 22.

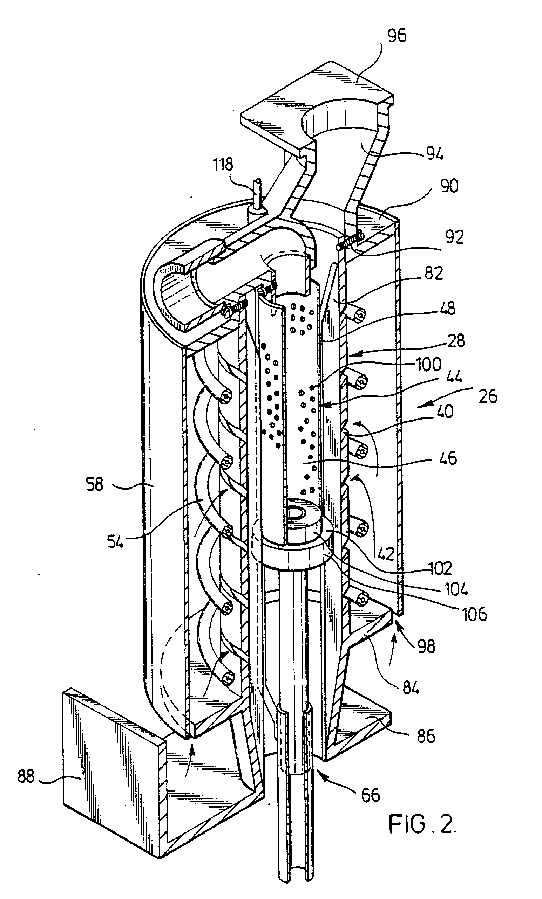

The barrel peripheral wall 38 is perforated by having a plurality of apertures 40 formed therein. The apertures, according to a preferred embodiment of this invention, are circumferentially extending slots. It is appreciated that other forms of apertures may be provided in the wall. Conditioning gases, as represented by arrows 42, are caused to flow through the apertures 40 of the barrel wall and into the barrel so as to flow over and about the granular resin 20. Internally of the barrel 28 is a device 44 which defines a channel 46. The channel 46 extends lengthwise of the barrel 28 and centrally thereof. The device 44, according to this preferred embodiment, comprises a perforated tube 48, the details of which are shown in Figure 2. Thus the gases, as they flow over the granular resin, travel through the perforated tube 48 and upwardly of the channel 46 in the direction of arrow 50 to be exhausted in the direction of arrows 52 away from and externally of the barrel 28.

Several apparent techniques may be employed to cause the flow of air 42 through the barrel wall and upwardly through channel 46. For example, simple heating of the air contained within chamber 56 defined by outer sleeve 58 may be done to cause the air to flow through the apertures 40 and upwardly through the channel 50. The air may be heated by any suitable heating device such as heater bands about the barrel periphery, heater cartridges within the barrel wall and/or fins or preferably a heater coil 54. The coil 54 is preformed into a diameter greater than the periphery of barrel wall 38. Insulating spacers 55 of porcelain or the like may be used to space the heating coil from the barrel wall to ensure that the coil does not contact the wall. The use of the spacers prevents over heating of the wall in certain areas to avoid hot spots on the barrel wall which could melt the resin and foul the barrel interior. However, if for some reason the heating coil momentarily increases to an undesirably high temperature, the spacing from the barrel wall acts as a buffer so that the extraordinarily high temperature of the heating coil does not directly and immediately affect the temperature of the resin. This arrangement is important to accommodate transients in the temperature of the coil which may be caused by power surges and momentary inoperativeness of the controller for the heating coil.

Other approaches to improving the rate of gas glow over the resin include providing devices which will force the air over the coils 54 and upwardly of the channel 46. This may be accomplished by locating a fan which would force air in the direction of arrow 63 into the entrance region 60 of the chamber 56. Alternatively, a fan 62 may be mounted at the exhaust port 64 of the channel ducting 46 to assist the flow of heated gases upwardly within channel 46. Fan 62 is power driven to withdraw the gases from the ducting 46.

In addition to any surface moisture which has to be removed from the granular resin by air currents 42, water vapours are also generated in region 24 where the resin becomes molten. With hygroscopic resins, any moisture contained internally thereof is heated to form water vapour as the plastic melts. By way of an arrangement 66, an extension is provided for the channel 46. The tube arrangement 66 extends out of the discharge portion 36 of the bin into the inlet 22, to adjacent the screw device 14 in the region 24. Water vapour, as generated in and migrating to this region, can pass upwardly of the tube extension 66 in the direction of arrow 68. The upward flow of air in channel 46 as indicated by arrow 50 draws such water vapour in the direction of arrow 68.

The temperature to which the resin 20 is heated in the bin is important to ensure smooth flow of the resin into screw region 24. The heated air, as it passes over the heater coils 54, must be monitored so as to not overheat the resin yet provide sufficient heat to remove any surface moisture from the granular resin and to raise the temperature uniformly throughout the resin. This prewarming of the resin ensures that it melts quickly in the plasticizing screw, namely, in region 24. Thus any water vapour generated is in the proximity of the tube extension 66 and not further down the screw where it would be difficult to remove any generated water vapour.

A temperature controller 70 is provided and powered by line 72 to control the temperature of the resin. The temperature controller 70 controls the amount of power delivered through line 74 to the heating coil 54. A temperature sensor at 76 is provided which electrically communicates with the controller 70 via line 78. By way of experimentation, the wall temperature of the bin 28 is measured to assess the corresponding temperature of the resin. Thus by programming the controller 70 and properly setting dial 80 to the correct temperature, the voltage on coil 54 is controlled by the controller 70 in accordance with the temperature sensed at 76. This ensures that the temperature of the resin is maintained at the desired level as it is discharged from the conditioning apparatus 26.

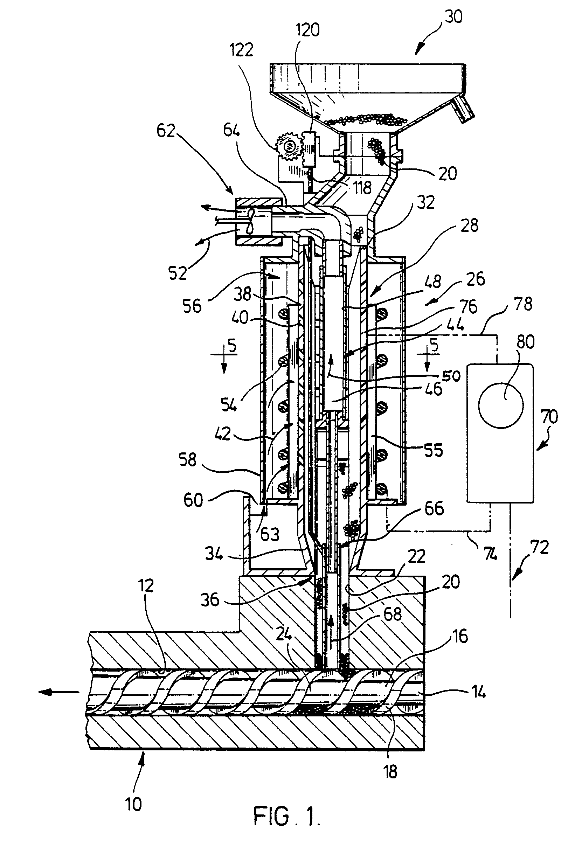

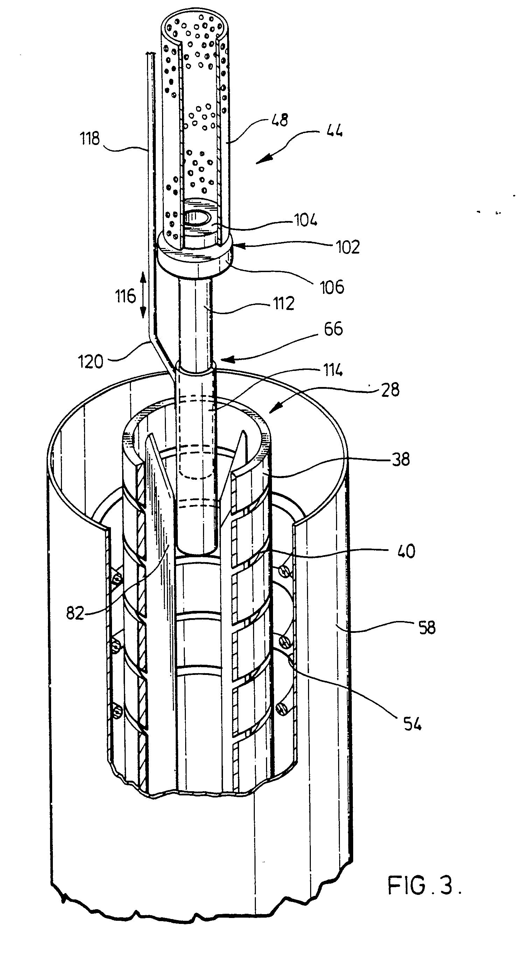

Figure 2 shows that the barrel in apparatus 26 is cast from a metal. Various metals may be employed, such as steel or aluminum alloys. Aluminum alloys are preferred because of their higher heat conductivity. Internally projecting of the bin or barrel are integral fins 82 which are shown in more detail in Figure 3. A function of the fins is to locate the tubular arrangement 44 centrally of the barrel 28. Another function is that the integral fins 82, as they extend the length of the barrel, support the structure of the barrel with apertures in the wall. When the slots 40 are cut in the barrel sidewall around its entire periphery, the fins which are integral with the wall serve to retain the structural integrity of the barrel. As shown in Figures 1 and 2, the slots 40 are sloped downwardly to prevent granular resin from falling out of the bin. The downwardly sloped slots also direct warming air downwardly into the resin to diffuse the air somewhat before progressing upwardly and outwardly through the channel 46.

The barrel 28 includes an annular flange 84 at its lower portion and an integrally formed base plate 86 for purposes of mounting the conditioning apparatus 26 to the screw feed arrangement. Upstanding plate 88 is provided to which the controller 70, as schematically shown in Figure 1, is secured.

At the upper portion of the barrel 28 is a collar arrangement 90 which is secured to the barrel wall by way of bolts 92. The collar 90 includes an elbow 94 with a flange portion 96 to which the hopper arrangement 30 is secured. To the periphery of collar 90 is secured the outer shell 58 for the apparatus which houses the barrel and heating coil 54. The housing 58 extends downwardly and is marginally spaced from the periphery of flange 84 to provide a space upwardly through which conditioning air may flow in the direction of arrows 98.

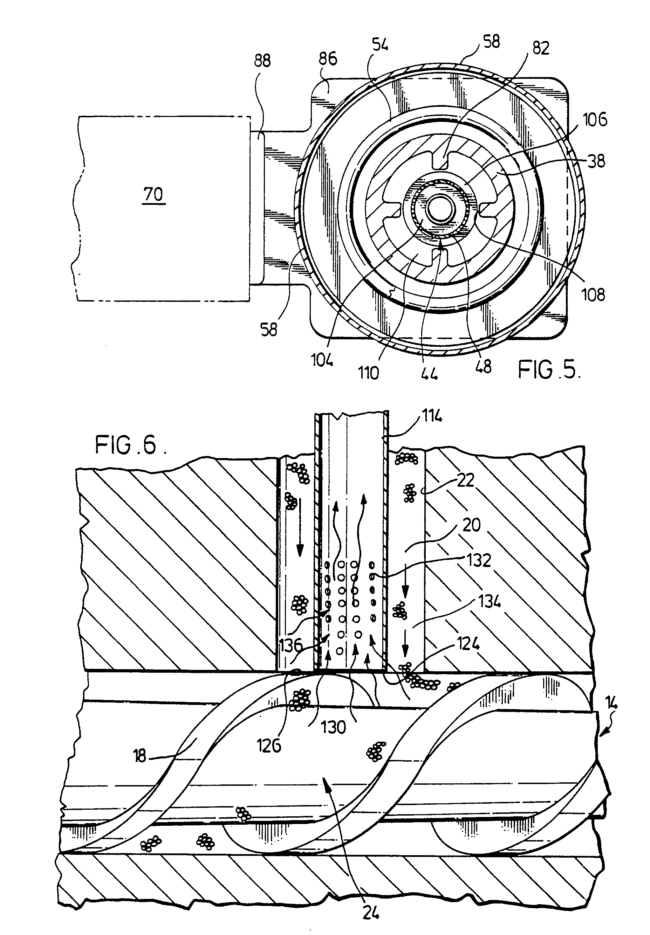

The tubular arrangement 44 for defining the central channel consists of a perforated tube 48 having perforations 100. The tube is mounted on ring 102 having an inner portion 104 over which the tube 48 is placed and is in contact therewith and an outer portion 106 which is larger in diameter than the tube 48. The diameter of ring outer portion 106 is slightly less than the diameter of the opening defined by the fins 82. As is apparent from Figure 5, the outer ring 106 is loosely received by the fin extremities 108. The spacing between the fins 82, according to the preferred embodiment, is equal to provide four channels 110. The spacing between the fins 82 is such that the channels 110 are of sufficient size to permit ready downward gravitational flow of the granular resin. By way of the fins projecting into the flow of the resin, the warming of the resin is more efficient. The fins and bin wall may be cast aluminum alloy which has a high heat conductivity to warm thereby the granular resin more effectively and uniformly.

As shown in Figure 3, the tube arrangement extension 66 comprises a first tube 112 and a second tube 114. Tube 112 is secured in the ring 102 to extend downwardly therefrom. Tube 114 has an internal diameter which approximates the external diameter of tube 112 so as to slidably move thereover in the direction of arrow 116. Secured to the tube 114 is a rod 118 which is angled at 120 to extend upwardly through a corresponding channel 110 between the fins 82. The rod 118 extends upwardly through the collar arrangement 90 to extend outwardly therefrom, as shown in Figure 2. Rod 118 is secured to a rack 120 which meshes with a pinion 122. A crank (not shown) with appropriate brake may be used to adjust the rack and pinion 120, 122 to move the tube 114 up and down relative to the plasticization screw 14. This arrangement provides the needed adjustability in the axial position of the tube 114, because with the many different forms of feed and plasticization screws for plastic forming machines, different height requirements are needed. With the rack and pinion arrangement, the apparatus 26 may be readily adjusted to provide the proper positioning for the tube 114 relative to the screw.

Turning to Figure 6, the positioning of tube 114 is shown in more detail. The tube end 124 is slightly above the uppermost elevation 126 for the spiral ridge 18 of the screw 14. The resin 20 passes downwardly of the inlet 22 in the direction of arrows 128 to be moved away from region 24 by rotation of the screw 14 in a manner well understood by those skilled in the art of plastics forming equipment. Water vapours, which are generated in region 24 by the resin becoming plasticized, move upwardly into the tube 114 in the direction of arrows 130. By way of the device 62 or its equivalent, creating an upward flow of gases in channel 46, the vapours are drawn upwardly of the tube 114 for discharge externally of the bin.

According to a preferred aspect of the invention, the lower portion of the tube 114 may have perforations 132. The water vapours generated in region 24 principally diffuse toward the lower end 124 of the tube. However, some of the vapours may diffuse upwardly through the annular region 134. Thus perforations 132 allow such vapours to be drawn into the tube in the directions of arrows 136. With this arrangement, aside from the removal of the surface moisture on the granular resin, any moisture or water vapour generated in the lower region at the area of the screw feed where plasticization takes place, is removed from the molten plastic before injection to minimize or alleviate any imperfections in the molded product.

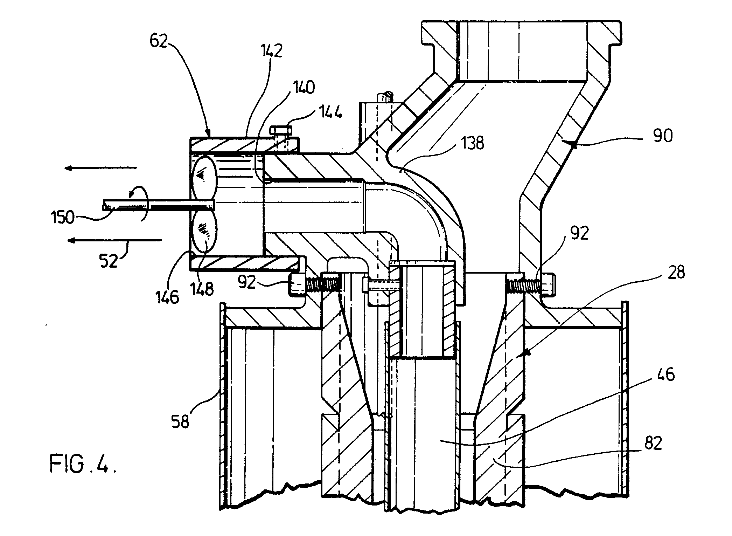

As previously explained various techniques may be employed to generate or assist in forming a relative low air pressure in the central channel of the bin to withdraw gases and water vapours from the base of the channel in the feed screw area. An alternative to heating the air in enclosure 56 to provide an upward flow in channel 46, is the use of a fan device 62 as shown in Figure 4. The channel 46, by way of an elbow 138 in the collar arrangement 90, directs the gases externally of the bin 28 to define an outlet port 140. The fan device 62 is mounted on the outlet port 140 by way of casting 142 secured to the port 140 by bolt 144. Casting 142 provides cowling 146 for the fan blades 148 which are rotated on power driven shaft 150. The fan creates a low pressure at the nozzle opening so as to withdraw gases from channel 46 in the direction of arrow 52.

In the event that it is desired to clean the interior of the bin 28, it is apparent that bolts 92, as shown in Figure 4, may be removed to permit removal of the collar arrangement 90 and accompanying venturi device 62. As a result the tube arrangement 44 with extensions 66 may be removed upwardly and outwardly of the bin 28 to allow cleaning of the interior of the bin and cleaning of the tube arrangement 44. This is particularly necessary when coloured resins are used and minor amounts of coloured material may remain in the bin which must be removed before introduction of a different coloured resin for use in the plastics forming machine.

The provision of an integrally cast barrel with inwardly projecting fins provides several advantages as already described in detail and summarized as follows. Where the slots in the barrel each extend around the entire periphery of the barrel wall and extend all the way therethrough, the fins serve to retain the structure of the barrel wall intact and at the same time the fins, as they project into the resin flowing down through the barrel, provide an effective efficient means for uniformly heating the resin. In addition, the fins serve to in turn centrally locate the tubular central channel in the bin for removal of gases which have flowed over the granular resin. The fins may be of a size to add additional rigidity to the structure of the barrel wall with apertures to withstand heavy loads on the barrel. For example, hoppers and the like which are mounted to the upper portion of the barrel may be of considerable weight which is entirely supported by the integrally cast barrel wall and fin supports.

## Claims

1. Apparatus for removing moisture from granules of plastic resin comprising a barrel (28) with a peripheral wall (38) which is vertically oriented in use and having means for receiving granular resin into the upper region (32) thereof whereby such granular resin moves downwardly of said barrel under the influence of gravity, means for discharging granular resin from the lower region (34) of said barrel, characterised in that a plurality of longitudinally extending spaced-apart means provide fin-like projections (82) internally of and integrally with said barrel wall (38), a plurality of spaced-apart apertures (40) in the barrel wall, means (44) extending lengthwise of said barrel to define a channel (46) for permitting a flow of gases thereinto and therealong, said fin-like projections (82) being spaced from said channel means (44) with said channel means located centrally of said barrel (28), means for effecting a flow of gases for drying granular resin through the apertures (40) in said barrel wall, over granules of resin in said barrel and into and along said channel means (44), said channel means being adapted to exhaust such gases away from such granular resin and outwardly of said barrel.

2. Apparatus according to claim 1, characterised in that said channel means (44) is a perforated tube of an external dimension slightly less than the internal dimension defined by the extremities of the internally projecting fin-like projections (82) to locate thereby said tube centrally of said barrel (28).

3. Apparatus according to claim 2, characterised in that means couples said tube to the exterior of said barrel (28), an exhaust fan (62) connected to said coupling means exterior of said barrel to withdraw gases from said channel means (44).

4. Apparatus according to claim 2, characterised in that each of said fin-like projections (82) extends substantially the length of the interior of the barrel wall (38), said barrel (28) and said tube being cylindrical in shape whereby said tube is of an external diameter slightly less than the internal diameter defined by the extremity of the fin-like projections (82), said fin-like projections being sufficiently spaced apart to permit downward passage of such granular resin between said fin-like projections.

5. Apparatus according to any one of the preceding claims, characterised in that said apertures (40) are sloped downwardly as they extend through the barrel wall (38).

6. Apparatus according to any one of the preceding claims, characterised in that means forming an extension (66) of said channel means (44) extends beyond a barrel discharge opening (36) and are adapted to extend into an inlet (22) for receiving conditioned granular resin of a plastics molding or extrusion machine when said apparatus is in use, said extension forming a secondary channel into which water vapour given off by plasticising such granular resin in a plasticising screw passes, said extension being perforated about its lower portion, such that a flow of gases upwardly of said channel means (44) draw the water vapour through the apertures (40) into said extension and upwardly into said channel means in order to exhaust said barrel.

7. Apparatus according to claim 6, characterised in that said channel means (44) and its extension (66) constitutes a multiple tube arrangement including an upper tube and a lower tube which is mounted on said upper tube in a manner to provide axial adjustment of said lower tube relative to said upper tube.

8. Apparatus according to claim 7, characterised in that means external of said barrel (28) adjusts the axial position of said lower tube and releasably locks said lower tube in any desired position.

9. Apparatus according to any of the preceding claims characterised in that said barrel (28) is of cast aluminum alloy.

10. Apparatus according to any one of the preceding claims, characterised in that each of said apertures (40) extends circumferentially around the barrel (28), said fin-like projections (82) retaining the structural integrity of the barrel wall (38).

## Patentansprüche

1. Apparat zum Entfernen von Feuchtigkeit aus granuliertem Plastharz, welcher Apparat eine Trommel (28) mit einer im Betrieb vertikal ausgerichteten Umfangswand (38) und Mittel zum Aufnehmen von Harzgranulat in den oberen bereich (32) derselben aufweist, wobei ein solches Harzgranulat sich in der Trommel unter dem Einfluß der Schwerkraft abwärtsbewegt, und weiter Mittel zur Ausgabe von Harzgranulat aus dem unteren Bereich (34) der Trommel aufweist, dadurch gekennzeichnet, daß eine Mehrzahl von sich in Längsrichtung erstreckenden und im Abstand voneinander angeordneten, rippenartige Fortsätze (82) bildenden Mitteln an der Innenseite der genannten Trommelwand (38) angeordnet und mit dieser integriert ist, daß eine Mehrzahl von im Abstand voneinander angeordneten Öffnungen (40) in der Trommelwand vorgesehen ist, daß Mittel (44) vorgesehen sind, die sich in Längsrichtung der Trommel erstrecken und einen Kanal (46) zur Führung einer Gasströmung in diese und

längs dieser begrenzen, welche rippenartigen Fortsätze (82) im Abstand von den genannten Kanalmitteln (44) angeordnet sind, wobei sich diese Kanalmittel in der Mitte der Trommel (28) befinden, und daß Mittel zum Herbeiführen einer durch die genannten Öffnungen (40) in der Trommelwand, über das in der Trommel befindliche Harzgranulat und in die Kanalmittel (44) und längs dieser fließenden Gasströmung zum Trocknen des Harzgranulats vorgesehen sind, wobei die Kanalmittel zum Abführen solcher Gase vom Harzgranulat und aus der Trommel nach außen ausgebildet sind.

2. Apparat nach Anspruch 1, dadurch gekennzeichnet, daß die Kanalmittel (44) durch ein perforiertes Rohr gebildet sind, dessen Außenabmessung etwas geringer ist, als die durch die Ränder der nach innen ragenden rippenartigen Fortsätze (82) bestimmte Innenabmessung, um dadurch dieses Rohr in der Mitte der Trommel (28) zu positionieren.

3. Apparat nach Anspruch 2, dadurch gekennzeichnet, daß Mittel, welche das genannte Rohr mit dem Äußeren der Trommel (28) verbinden, und ein Absaugventilator (62), der an diese Verbindungsmittel außerhalb der Trommel angeschlossen ist um Gase aus den Kanalmitteln (44) abzuziehen, vorgesehen sind.

4. Apparat nach Anspruch 2, dadurch gekennzeichnet, daß jeder der rippenartigen Fortsätze (82) sich im wesentlichen über die Länge des Inneren der Trommelwand (38) erstreckt, und daß die genannte Trommel (28) und das genannte Rohr zylindrische Form haben, wobei dieses Rohr einen Außendurchmesser hat, der etwas geringer ist, als der durch den Rand der rippenartigen Fortsätze (82) bestimmte Innendurchmesser, welche rippenartige Fortsätze in hinreichendem Abstand voneinander angeordnet sind, um eine Abwärtsbewegung des Harzgranulates zwischen den rippenartigen Fortsätzen zu gestatten.

5. Apparat nach einem der vorhergehenden Ansprüche, dadurch gekennzeichnet, daß die genannten Öffnungen (40) in ihrem Verlauf durch die Trommelwand (38) schräg nach unten gerichtet sind.

6. Apparat nach einem der vorhergehenden Ansprüche, dadurch gekennzeichnet, daß Mittel vorgesehen sind, welche eine Verlängerung (66) der genannten Kanalmittel (44) bilden und über eine Abführöffnung (36) der Trommel hinaus führen und zum Hineinragen in den zum Einbringen konditionierten Harzgranulats vorgesehenen Einlaß (22) einer Kunststoffpreß- oder -strangpreßmaschine im Betrieb des Apparates ausgebildet sind, wobei diese Verlängerung einen zweiten Kanal bildet, in den Wasserdampf, der beim Plastifizieren eines solchen Harzgranulats in einer Plastifizierungsschnecke freigesetzt wird, wandert, welche Verlängerung in ihrem unteren Abschnitt ringsum perforiert ist, so daß ein Gasstrom oberhalb der genannten Kanalmittel (44) den Wasserdampf durch die Öffnungen (40) in die genannte Verlängerung und nach oben in die genannten Kanalmittel zieht, um die Trommel auszusaugen.

7. Apparat nach Anspruch 6, dadurch gekennzeichnet, daß die genannten Kanalmittel (44) und deren Verlängerung (66) eine Mehrfachrohranordnung bilden, welche ein oberes Rohr und ein unteres Rohr, das am oberen Rohr so angebracht ist, daß eine axiale Einstellbarkeit des unteren Rohres in bezug auf das obere Rohr geschaffen ist, aufweist.

8. Apparat nach Anspruch 7, dadurch gekennzeichnet, daß außerhalb der Trommel (28) Mittel vorgesehen sind, mit denen die axiale Lage des genannten untren Rohres einstellbar ist und mit denen das genannte untere Rohr in jeder gewünschten Stellung lösbar fixierbar ist.

9. Apparat nach einem der vorhergehenden Ansprüche, dadurch gekennzeichnet, daß die genannte Trommel (28) aus einer gegossenen Aluminiumlegierung gebildet ist.

10. Apparat nach einem der vorhergehenden Ansprüche, dadurch gekennzeichnet, daß jede der genannten Öffnungen (40) sich in Umfangsrichtung rings um die Trommel (28) erstreckt und daß die rippenartigen Fortsätze (82) den strukturellen Zusammenhalt der Trommelwand (38) sichern.

**Revendications**

1. Appareil pour l'élimination de l'humidité de granules de résine plastique qui comprend un corps cylindrique (28) comportant une paroi périphérique (38) qui est orientée verticalement pendant le fonctionnement et, dans sa partie supérieure (32), des moyens de réception de la résine en granules, cette résine en granules se déplaçant vers le bas du corps cylindrique sous l'action de la pesanteur, et des moyens de déchargement de la résine en granules à partir de la partie inférieure (34) du corps cylindrique, caractérisé en ce qu'une pluralité de moyens espacés les uns des autres et s'étendant dans le sens longitudinal constituent des parties saillantes (82) en forme d'ailettes situées à l'intérieur et faisant partie intégrante de la paroi (38) du corps cylindrique, une pluralité d'ouvertures (40) espacées les unes des autres dans la paroi du corps cylindrique, des moyens (44) qui s'étendent dans le sens de la longueur du corps cylindrique pour délimiter un conduit (46) permettant la circulation d'un courant de gaz à l'intérieur et dans le sens de la longueur du conduit, les parties saillantes (82) en forme d'ailettes étant situées à une certaine distance des moyens (44) délimitant ce conduit et ces moyens étant situés au centre dudit corps cylindrique (28), des moyens assurant, pour le séchage de la résine en granules, la circulation d'un courant de gaz au travers d'ouvertures (40) ménagées dans la paroi du corps cylindrique, sur les granules de résine contenues dans ledit corps cylindrique et à l'intérieur et le long des moyens (44) constituant le conduit, ces moyens constituant le conduit étant conçus de manière à évacuer ces gaz loin de la résine en granules et vers l'extérieur du corps cylindrique.

2. Appareil selon la revendication 1, caractérisé en ce que les moyens (44) constituant le conduit sont un tube perforé ayant une dimension extérieure légèrement inférieure à la dimension intérieure définie par les extrémités des parties (82) en forme d'ailettes qui font saillies vers l'intérieur de manière à placer le tube en position centrale dans le corps cylindrique (28).

3. Appareil selon la revendication 2, caractérisé en ce que des moyens accouplent ledit tube à l'extérieur dudit corps cylindrique (28), un ventilateur d'évacuation (62) étant relié auxdits moyens d'accouplement à l'extérieur dudit corps cylindrique pour extraire les gaz desdits moyens (44) constituant le conduit.

4. Appareil selon la revendication 2, caractérisé en ce que chacune des parties saillantes (82) en forme d'ailettes s'étend essentiellement sur toute la longueur de l'intérieur de la paroi (38) du corps cylindrique, ledit corps cylindrique (28) et ledit tube étant de forme cylindrique, de manière que le tube présente un diamètre extérieur légèrement inférieur au diamètre intérieur déterminé par les extrémités des parties saillantes (82) en forme d'ailettes, ces parties saillantes en forme d'ailettes étant suffisamment espacées les unes des autres pour permettre à la résine en granules de passer vers le bas entre les dites parties saillantes en forme d'ailettes.

5. Appareil selon l'une quelconque des revendications précédentes, caractérisé en ce que les ouvertures (40) sont inclinées vers le bas sur toute la longueur de leur trajet à travers la paroi (38) du corps cylindrique.

6. Appareil selon l'une quelconque des revendications précédentes, caractérisé en ce que les moyens qui forment un prolongement (66) des moyens (44) constituant le conduit s'étendent au-delà d'une ouverture (36) de déchargement du corps cylindrique et ils sont conçus de manière à s'étendre dans une ouverture d'entrée (22) pour recevoir la résine en granules conditionnés d'une machine de moulage ou d'extrusion de matière plastique pendant le fonctionnement de l'appareil, ledit prolongement constituant un conduit secondaire dans lequel passe la vapeur d'eau dégagée par la plastification de la résine en granules dans une vis de plastification, ledit prolongement étant perforé autour de sa partie inférieure de telle manière qu'un courant de gaz circulant vers le haut desdits moyens (44) constituant le conduit entraîne la vapeur d'eau au travers des ouvertures (40) dans ledit prolongement et vers le haut dans les moyens constituant le conduit pour évacuer le corps cylindrique.

7. Appareil selon la revendication 6, caractérisé en ce que les moyens (44) constituant le conduit et leur prolongement (66) constituent un ensemble tubulaire multiple comprenant un tube supérieur et un tube inférieur qui est monté sur le tube supérieur de manière à permettre un réglage axial du tube inférieur par rapport au tube supérieur.

8. Appareil selon la revendication 7, caractérisé en ce que des moyens extérieurs audit corps cylindrique (28) règlent la position axiale du tube inférieur et verrouillent d'une manière amovible le tube inférieur dans n'importe quelle position désirée.

9. Appareil selon l'une quelconque des revendications précédentes, caractérisé en ce que le corps cylindrique (28) est en alliage d'aluminium moulé.

10. Appareil selon l'une quelconque des revendications précédentes, caractérisé en ce que chacune desdites ouvertures (40) s'étend sur une circonférence autour du corps cylindrique (28), les parties saillantes (82) en forme d'ailettes maintenant l'intégrité structurelle de la paroi (38) du corps cylindrique.

FIG. 1.

FIG.2.

0 124 294

2

FIG.3.

FIG.4.

0 124 294

FIG.5.

FIG.6.

5